# EUROPÄISCHE PATENTSCHRIFT

(11) **EP 4 188 632 B1**
(45) Veröffentlichungstag und Bekanntmachung des Hinweises auf die Patenterteilung: **15.01.2025**
(21) Anmeldenummer: 20750244.4
(22) Anmeldetag: 30.07.2020
(51) Int. Cl.: B23K 20/00, B23K 20/10, B23K 101/32, B23K 101/38

(54) **VERFAHREN ZUM MEHRSTUFIGEN SCHWEISSEN VON KNOTEN MITTELS EINER ULTRASCHALLSCHWEISSEINRICHTUNG**
METHOD FOR MULTI-STAGE WELDING OF NODES BY MEANS OF AN ULTRASONIC WELDING DEVICE
PROCÉDÉ DE SOUDAGE EN PLUSIEURS ÉTAPES DE NOEUDS AU MOYEN D'UN DISPOSITIF DE SOUDAGE PAR ULTRASONS

(43) Veröffentlichungstag der Anmeldung: 07.06.2023
(73) Patentinhaber: Schunk Sonosystems GmbH, 35435 Wettenberg (DE)
(72) Erfinder: KÄMMERER, Dennis Tobias, 35435 Wettenberg (DE); SCHARY, Andreas, 35644 Hohenahr (DE); KLEESPIESS, Björn, 35606 Solms (DE)
(74) Vertreter: Qip Patentanwälte Dr. Kuehn & Partner mbB
(86) Internationale Anmeldenummer: PCT/EP2020/071582
(87) Internationale Veröffentlichungsnummer: WO 2022/022833

(56) Entgegenhaltungen:
- WO-A1-2012/060466
- JP-A- 2007 185 706
- JP-A- 2020 068 141
- US-A1- 2019 393 664

## Beschreibung

Die vorliegende Erfindung betrifft ein Verfahren zum Schweißen eines Knoten mittels einer Ultraschallschweißeinrichtung entsprechend dem Oberbegriff des Anspruchs 1 (siehe z.B. JP 2007 185706 A).

### HINTERGRUND DER ERFINDUNG

Für verschiedenste technische Anwendungen kann es notwendig sein, zwei Komponenten mechanisch fest und/oder elektrisch leitfähig miteinander zu verbinden. Beispielsweise kann es für verschiedene Einsatzzwecke erforderlich sein, Litzen von Kabeln mechanisch und elektrisch leitfähig miteinander zu verbinden. Dadurch können beispielsweise Kabelstränge oder Kabelbäume gefertigt werden, die dazu verwendet werden können, elektrische Verbraucher, etwa innerhalb eines Fahrzeugs, miteinander, mit einer Energiequelle und/oder mit einer Steuerung elektrisch leitfähig zu verbinden. Um elektrisch leitfähige Komponenten stoffschlüssig und somit mechanisch belastbar und elektrisch gut leitfähig miteinander zu verbinden, wurde das sogenannte Ultraschallschweißen entwickelt. Dabei handelt es sich um eine spezielle Ausprägung des Reibschweißens, bei dem zu verschweißende Komponenten mit Oberflächen aneinander in Anlage gebracht und unter geringem Druck und hochfrequenten mechanischen Schwingungen gegeneinander bewegt werden. Die Schwingungen können mithilfe einer Sonotrode erzeugt werden, in der Ultraschallschwingungen mit Frequenzen von typischerweise 20 kHz bis 50 kHz erzeugt und auf wenigstens einen der Fügepartner übertragen werden. Durch plastisches Fließen können sich die Fügepartner dann oberflächennah ineinander verzahnen oder verhaken, ohne dass die Materialien der Fügepartner notwendigerweise schmelzen. Durch Ultraschallschweißen können Fügepartner daher schonend, schnell und wirtschaftlich miteinander verbunden werden. Schweißstellen, an denen mehrere elektrische Leiter miteinander verbunden sind, werden auch als Knoten bezeichnet.

Ein Schweißen von Knoten mit relativ großen Querschnitten kann insofern schwierig sein, als von der Sonotrode eingebrachte Ultraschallenergie im Allgemeinen nur von einer mit einer Sonotrodenoberfläche in Kontakt stehenden Oberfläche der zu verschweißenden Leiter in das Gesamtvolumen des Knotens eingebracht wird, wobei es zu einer inhomogenen Verteilung der Ultraschallenergie und somit zu einer inhomogenen Verschweißung der Leiter kommen kann.

Zum Schweißen von Knoten mit relativ großen Querschnitten kann ein zweistufiges Ultraschallschweißverfahren eingesetzt werden, bei dem beispielsweise zunächst ein kleinerer Knoten geschweißt wird und dieser in einem weiteren Schritt mit einem oder mehreren weiteren elektrischen Leitern zu einem größeren Knoten mit einem gewünschten Gesamtquerschnitt verschweißt wird. Entsprechende Verfahren sind beispielsweise in WO 2015/007619 A1 und DE 2011 014 801 B4 beschrieben.

In DE 11 2014 002 908 T5 wird beispielsweise ein Ultraschallschweißverfahren beschrieben, bei dem ein Drahtbündel in mehreren Schweißvorgängen geschweißt wird und das Drahtbündel zwischen zwei Schweißvorgängen relativ zur Sonotrode gedreht wird.

### ZUSAMMENFASSUNG DER ERFINDUNG UND VORTEILHAFTER AUSFÜHRUNGSFORMEN

Es kann ein Bedarf an einem Verfahren zum Schweißen eines Knotens mittels einer Ultraschallschweißeinrichtung bestehen, durch das Knoten, insbesondere Knoten mit verhältnismäßig großen Querschnitten, mit gleichbleibend hoher Qualität erzeugt werden können. Ferner kann ein Bedarf an einem Leiterbündel bestehen, bei dem mehrere elektrische Leiter mit hoher Qualität zu einem Knoten verschweißt sind. Einem solchen Bedarf kann mit dem Gegenstand der unabhängigen Ansprüche entsprochen werden. Vorteilhafte Ausführungsformen sind in den abhängigen Ansprüchen sowie der nachfolgenden Beschreibung definiert.

Ein erster Aspekt der Erfindung betrifft ein Verfahren zum Schweißen eines Knotens mittels einer Ultraschallschweißeinrichtung entsprechend Anspruch 1. Die Ultraschallschweißeinrichtung umfasst eine Sonotrode zum Erzeugen von Ultraschallschwingungen, einen Amboss, ein erstes Seitenelement, ein zweites Seitenelement und einen Verdichtungsraum, dessen Höhe durch Variieren eines Abstands zwischen der Sonotrode und dem Amboss einstellbar ist und dessen Breite durch Variieren eines Abstands zwischen dem ersten Seitenelement und dem zweiten Seitenelement einstellbar ist. Das Verfahren umfasst die folgenden Schritte, die vorzugsweise in der angegebenen Reihenfolge durchgeführt werden können: Anordnen zu verschweißender erster Leiterabschnitte mindestens zweier elektrischer Leiter in dem Verdichtungsraum; Einstellen der Breite des Verdichtungsraumes auf einen vorgegebenen Wert für einen ersten Schweißvorgang; Durchführen des ersten Schweißvorgangs durch Aktivieren der Sonotrode und Zusammendrücken der ersten Leiterabschnitte zwischen der Sonotrode und dem Amboss, wobei die ersten Leiterabschnitte zu einem ersten Knoten verschweißt werden; Anordnen eines zu verschweißenden zweiten Leiterabschnitts mindestens eines weiteren elektrischen Leiters und des ersten Knotens in dem Verdichtungsraum; Einstellen der Breite des Verdichtungsraumes auf einen vorgegebenen Wert für einen zweiten Schweißvorgang, wobei die Breite des Verdichtungsraumes für den zweiten Schweißvorgang um einen vorgegebenen Toleranzwert größer als die Breite des Verdichtungsraumes für den ersten Schweißvorgang ist; und Durchführen des zweiten Schweißvorgangs durch erneutes Aktivieren der Sonotrode und Zusammendrücken des ersten Knotens und des zweiten Leiterabschnitts zwischen der Sonotrode und dem Amboss, wobei der erste Knoten und der zweite Leiterabschnitt zu einem zweiten Knoten verschweißt werden.

Die Sonotrode und der Amboss können in mindestens einer Richtung relativ zueinander beweglich in der Ultraschallschweißeinrichtung angeordnet sein, etwa um einen vertikalen und/oder horizontalen Abstand zwischen der Sonotrode und dem Amboss zu vergrößern oder zu verringern. Dabei kann beispielsweise die Sonotrode feststehend und der Amboss beweglich sein. Möglich ist jedoch auch, dass die Sonotrode beweglich und der Amboss feststehend ist. Alternativ können sowohl die Sonotrode als auch der Amboss beweglich sein.

Ein Seitenelement kann beispielsweise ein Seitenschieber oder eine Tuschierplatte sein. Das erste Seitenelement und das zweite Seitenelement können in mindestens einer Richtung relativ zueinander beweglich in der Ultraschallschweißeinrichtung angeordnet sein. Beispielsweise kann das erste Seitenelement in horizontaler Richtung beweglich sein, während das zweite Seitenelement in horizontaler Richtung feststehend sein kann, und umgekehrt. Alternativ können beide Seitenelemente in horizontaler Richtung beweglich sein. Möglich ist auch, dass mindestens eines der beiden Seitenelemente zusätzlich in vertikaler Richtung beweglich ist.

Der Verdichtungsraum kann durch die Sonotrode, den Amboss, das erste Seitenelement und das zweite Seitenelement an vier verschiedenen Seiten begrenzt sein, zumindest während eines Schweißvorgangs. An einer oder mehreren weiteren Seiten kann der Verdichtungsraum offen sein. Beispielsweise kann der Verdichtungsraum während eines Schweißvorgangs nach oben hin durch den Amboss verschlossen sein. Durch Wegfahren des Ambosses kann der Verdichtungsraum nach oben hin geöffnet werden, etwa vor einem Schweißvorgang, um zu verschweißende elektrische Leiter in den Verdichtungsraum einzulegen, oder nach einem Schweißvorgang, um verschweißte elektrische Leiter aus dem Verdichtungsraum zu entnehmen. Um das Einlegen bzw. Entnehmen zu erleichtern, kann beispielsweise zusätzlich zum Wegfahren des Ambosses mindestens eines der beiden Seitenelemente eingefahren werden, sodass sich der Abstand zwischen dem ersten Seitenelement und dem zweiten Seitenelement entsprechend vergrößert.

Ein elektrischer Leiter kann eine Litze, d. h. ein Verbund aus mehreren einzelnen Drähten, oder ein einzelner Draht einer solchen Litze, d. h. eine massive Einzelader, sein. Der elektrische Leiter kann teilweise mit einem elektrisch isolierenden Material ummantelt sein. Dementsprechend kann ein zu verschweißender Leiterabschnitt ein nicht ummantelter Abschnitt des elektrischen Leiters sein, der sich an einem Ende des elektrischen Leiters oder zwischen zwei Enden des elektrischen Leiters befinden kann. Die zu verschweißenden Leiterabschnitte können unterschiedlich große oder gleich große Querschnittsflächen aufweisen. Der elektrische Leiter kann beispielsweise aus Metall oder einem anderen elektrisch leitfähigen Material sein. Beispielsweise kann der elektrische Leiter auch ein starres Teil wie etwa eine Anschlussklemme, eine Sammelschiene oder Ähnliches sein.

Unter einem Knoten kann im Allgemeinen eine durch Zusammenschweißen mindestens zweier Fügepartner erzeugte Fügestelle verstanden werden. Beispielsweise können in dem ersten Schweißvorgang mehrere Litzen, d. h. mehrere Drahtverbünde, miteinander zu dem ersten Knoten verschweißt werden. Es ist aber auch möglich, dass in dem ersten Schweißvorgang einzelne Drähte ein und derselben Litze miteinander zu dem ersten Knoten verschweißt werden, was auch als Kompaktieren bezeichnet wird. In diesem Fall kann der erste Knoten als ein kompaktierter Abschnitt dieser Litze aufgefasst werden. Anders ausgedrückt kann ein Knoten nur eine Leitung (bestehend aus mehreren einzelnen Drähten) oder mehrere Leitungen umfassen.

Im Rahmen des Verfahrens werden zu verschweißende erste Leiterabschnitte mindestens zweier elektrischer Leiter in dem Verdichtungsraum angeordnet. Hierzu kann der Verdichtungsraum beispielsweise geöffnet werden, etwa durch Wegfahren des Ambosses und/oder mindestens eines der beiden Seitenelemente. Die Breite des Verdichtungsraums kann dabei auf den vorgegebenen Wert für den ersten Schweißvorgang eingestellt werden. Im geschlossenen Zustand kann der Verdichtungsraum sowohl in seiner Höhe durch die Sonotrode und den Amboss als auch in seiner Breite durch die zwei Seitenelemente begrenzt sein.

Der erste Knoten und/oder der zweite Knoten kann einen rechteckförmigen, d. h. zumindest annähernd rechteckigen Querschnitt aufweisen. Unter rechteckförmig ist hier zu verstehen, dass der Querschnitt zumindest an zwei einander gegenüberliegenden Seiten abgeflacht ist. Beispielsweise kann der Querschnitt an allen vier Seiten abgeflacht sein. Möglich ist aber beispielsweise auch ein tonnenförmiger Querschnitt. Die Abmessungen des rechteckförmigen Querschnitts können beispielsweise den Abmessungen des Verdichtungsraumes im geschlossenen Zustand nach dem Schweißen entsprechen. Durch Aktivieren der Sonotrode wird die Sonotrode zum Schwingen gebracht und Schweißenergie in die zu verschweißenden Leiterabschnitte eingebracht.

Beispielsweise kann die Breite des Verdichtungsraumes auf eine Nennbreite des ersten bzw. zweiten Knotens eingestellt werden. Die Nennbreite kann eine gewünschte maximale Breite des ersten bzw. zweiten Knotens sein.

Die Breite des Verdichtungsraumes kann während des gesamten Schweißvorgangs konstant sein. Es ist jedoch auch möglich, dass die Breite des Verdichtungsraumes während des Schweißens verändert wird.

Ein weiterer elektrischer Leiter kann ein weiterer einzelner Draht oder eine weitere Litze, d. h. ein verschweißter oder unverschweißter Verbund aus weiteren einzelnen Drähten, sein. Möglich ist auch, dass der zweite Leiterabschnitt ein weiterer Knoten ist, in dem mehrere weitere elektrische Leiter miteinander verschweißt sind. Der weitere Knoten kann beispielsweise durch Ultraschallschweißen erzeugt worden sein. Beispielsweise kann der zweite Knoten aus dem ersten Knoten, mindestens einer unverschweißten Litze und/oder mindestens einer kompaktierten Litze geschweißt werden.

Das Verfahren umfasst ein Einstellen der Breite des Verdichtungsraumes auf einen vorgegebenen Wert für einen zweiten Schweißvorgang, wobei die Breite des Verdichtungsraumes für den zweiten Schweißvorgang um einen vorgegebenen Toleranzwert größer als die Breite des Verdichtungsraumes für den ersten Schweißvorgang ist. Der Toleranzwert kann so gewählt sein, dass der erste Knoten nach dem Einstellen der Breite des Verdichtungsraumes geringfügiges Spiel zwischen dem ersten Seitenelement und dem zweiten Seitenelement hat. Durch das Spiel wird ein Verkanten oder Verklemmen des ersten Knotens im Verdichtungsraum vermieden. Dadurch kann eine definierte Kräfteverteilung über den gesamten Querschnitt des ersten Knotens im nachfolgenden Schweißvorgang erreicht werden. Somit kann eine sehr homogene, d. h. sehr langlebige und sehr gut leitfähige Schweißverbindung erzeugt werden. Auch können durch das Spiel Schweißkraftverluste reduziert werden, indem ein direkter Kontakt des ersten Knotens zu den beiden Seitenelementen vermieden wird. Der Toleranzwert sollte nicht zu groß gewählt werden, damit beim nachfolgenden Schweißvorgang kein Material, etwa einzelne Drähte, am ersten Knoten vorbeigedrückt wird und/oder der resultierende Knoten keine allzu große(n) Stufe(n) aufweist.

Das Einstellen der Breite des Verdichtungsraums für den zweiten Schweißvorgang kann analog zum ersten Schweißvorgang erfolgen. Beispielsweise ist es möglich, dass der zweite Knoten abhängig von dem gewählten Toleranzwert in Richtung seiner Höhe in zwei unterschiedlich breite Knotenabschnitte unterteilt ist, die jeweils einen rechteckförmigen, d. h. zumindest annähernd rechteckigen Querschnitt aufweisen.

Versuche haben gezeigt, dass zusätzlich zur Reduzierung von Einzeladerabrissen und Verfärbungen die Prozesssicherheit erhöht werden konnte, unter anderem infolge gleichmäßigerer Verbinderfestigkeiten. Auch konnte eine gleichmäßigere Verteilung der Leitungen über die Knotenbreite beobachtet werden. Ferner konnte der Knotenaufbau einfach reproduziert werden.

Ohne den Umfang der Erfindung in irgendeiner Weise zu beschränken, können Ideen und mögliche Merkmale zu Ausführungsformen der Erfindung unter anderem als auf den nachfolgend beschriebenen Gedanken und Erkenntnissen beruhend angesehen werden.

Gemäß einer Ausführungsform wird der zweite Leiterabschnitt zwischen dem ersten Knoten und der Sonotrode angeordnet. Vor dem Anordnen des zweiten Leiterabschnitts kann zunächst der erste Knoten aus dem Verdichtungsraum entnommen werden. Hierzu kann der Verdichtungsraum entsprechend geöffnet werden (siehe oben). Anschließend kann der zweite Leiterabschnitt auf die Sonotrode gelegt werden. Auf den zweiten Leiterabschnitt kann dann der erste Knoten gelegt werden, sodass ein direkter Kontakt zwischen dem ersten Knoten und der Sonotrode vermieden wird. Im nachfolgenden Schweißvorgang wird die Schweißenergie also indirekt über den zweiten Leiterabschnitt in den ersten Knoten eingebracht. Dadurch kann eine erneute starke thermische und mechanische Belastung des ersten Knotens vermieden werden. Unter anderem können dadurch Brüche einzelner Drähte oder inhomogene Bereiche im Schweißgut vermieden oder zumindest reduziert werden.

Gemäß der Erfindung beträgt der vorgegebene Toleranzwert mindestens 0,01 mm. Gemäß einer alternativen Ausführungsform beträgt der vorgegebene Toleranzwert mindestens 0,05 mm. Gemäß einer weiteren alternativen Ausführungsform beträgt der vorgegebene Toleranzwert mindestens 0,1 mm.

Gemäß der Erfindung beträgt der vorgegebene Toleranzwert höchstens 5 mm.

Gemäß einer alternativen Ausführungsform beträgt der vorgegebene Toleranzwert höchstens 2 mm.

Durch Verwendung eines Toleranzwerts in den angegebenen Größenordnungen kann zum einen ein Verkanten oder Verklemmen des ersten Knotens im Verdichtungsraum vermieden werden. Zum anderen kann vermieden werden, dass während des zweiten Schweißvorgangs Material am ersten Knoten vorbeigedrückt wird, was sich qualitätsmindernd auf die Schweißverbindung auswirken könnte, und/oder der zweite Knoten allzu große Stufen aufweist. Dies vereinfacht die weitere Verarbeitung des Leiterbündels, etwa das Ummanteln des zweiten Knotens mit einem Schrumpfschlauch.

Gemäß einer Ausführungsform weist der zweite Knoten eine Querschnittsfläche von mindestens 3 mm² auf. Gemäß einer alternativen Ausführungsform weist der zweite Knoten eine Querschnittsfläche von mindestens 20 mm² auf. Gemäß einer weiteren alternativen Ausführungsform weist der zweite Knoten eine Querschnittsfläche von mindestens 50 mm² auf.

Gemäß einer Ausführungsform weist der zweite Knoten eine Nennbreite von mindestens 2 mm auf. Gemäß einer alternativen Ausführungsform weist der zweite Knoten eine Nennbreite von mindestens 5 mm auf. Gemäß einer weiteren alternativen Ausführungsform weist der zweite Knoten eine Nennbreite von mindestens 10 mm auf.

Wie bereits weiter oben angedeutet, wurde beobachtet, dass ein Bilden von Knoten verhältnismäßig großer Durchmesser und/oder mit verhältnismäßig komplexem Aufbau durch Ultraschallschweißen herausfordernd sein kann, da unzureichend homogene Verbindungen zwischen Leitern und/oder Beschädigungen von Leitern, insbesondere nahe den Oberflächen des Knotens, auftreten können. Versuche haben gezeigt, dass das hier vorgeschlagene Verfahren insbesondere zum Verschweißen elektrischer Leiter mit verhältnismäßig großen Leitungsquerschnitten, wie sie beispielsweise für Hochstromverbindungen in Elektro- oder Hybridfahrzeugen verwendet werden, geeignet ist.

Gemäß einer Ausführungsform ist die Breite des Verdichtungsraumes für den ersten Schweißvorgang gleich einer Nennbreite des ersten Knotens.

Gemäß einer Ausführungsform ist die Breite des Verdichtungsraumes für den zweiten Schweißvorgang gleich einer Nennbreite des zweiten Knotens.

Unter einer Nennbreite eines Knotens kann im Allgemeinen eine gewünschte maximale Breite des Knotens verstanden werden. Indem die Breite des Verdichtungsraumes auf die Nennbreite des ersten bzw. zweiten Knotens eingestellt wird, kann mit einfachen Mitteln sichergestellt werden, dass der erste bzw. zweite Knoten an seiner breitesten Stelle nicht breiter als ebendiese Nennbreite ist.

Gemäß einer Ausführungsform ist die Breite des Verdichtungsraumes für den ersten Schweißvorgang gleich einer Differenz zwischen der Nennbreite des zweiten Knotens und dem vorgegebenen Toleranzwert. Anders ausgedrückt kann die Nennbreite des ersten Knotens ausgehend von der Nennbreite des zweiten Knotens bestimmt werden. Die Breitendifferenz zwischen den zwei Knoten kann gerade so groß gewählt werden, dass ein Verkanten des ersten Knotens beim Einlegen auf den zweiten Leiterabschnitt zum Schweißen des zweiten Knotens vermieden wird.

Abhängig von der Materialhärte der Fügepartner und den Schweißparametern können die Fügepartner während eines Schweißvorgangs entweder über einen Teilbereich der Breite des Verdichtungsraumes oder über die komplette Breite des Verdichtungsraumes flachgedrückt werden. Im letzteren Fall kann der erste bzw. zweite Knoten durch entsprechendes Einstellen der Breite des Verdichtungsraumes sehr einfach und reproduzierbar mit einer gewünschten Endbreite erzeugt werden.

Gemäß einer Ausführungsform ist eine Querschnittsfläche des zweiten Leiterabschnitts mindestens so groß wie eine jeweilige kleinste Querschnittsfläche der ersten Leiterabschnitte. Dadurch kann mit lediglich zwei Schweißvorgängen ein verhältnismäßig komplexer und/oder verhältnismäßig großer Knoten aufgebaut werden.

Gemäß einer Ausführungsform umfasst das Verfahren ferner ein Anordnen eines zu verschweißenden dritten Leiterabschnitts mindestens eines zusätzlichen elektrischen Leiters und des zweiten Knotens in dem Verdichtungsraum, ein Einstellen der Breite des Verdichtungsraumes auf einen vorgegebenen Wert für einen dritten Schweißvorgang, wobei die Breite des Verdichtungsraumes für den dritten Schweißvorgang um einen vorgegebenen zusätzlichen Toleranzwert größer als die Breite des Verdichtungsraumes für den zweiten Schweißvorgang ist, sowie ein Durchführen des dritten Schweißvorgangs durch erneutes Aktivieren der Sonotrode und Zusammendrücken des zweiten Knotens und des dritten Leiterabschnitts zwischen der Sonotrode und dem Amboss, wobei der zweite Knoten und der dritte Leiterabschnitt des mindestens einen zusätzlichen elektrischen Leiters zu einem dritten Knoten verschweißt werden. In manchen Fällen, etwa wenn Knoten mit sehr großer Querschnittsfläche und/oder sehr komplexem Aufbau erzeugt werden sollen, kann ein Verschweißen in drei oder mehr als drei Schritten erforderlich sein, um die zur Verfügung stehende Schweißleistung möglichst effizient zu nutzen.

Beispielsweise kann der dritte Leiterabschnitt zwischen dem zweiten Knoten und der Sonotrode angeordnet werden. Somit wird ein direkter Kontakt zwischen dem zweiten Knoten und der Sonotrode vermieden. Im nachfolgenden Schweißvorgang wird die Schweißenergie also indirekt über den dritten Leiterabschnitt in den zweiten Knoten eingebracht. Dadurch kann eine erneute starke thermische und mechanische Belastung des zweiten Knotens vermieden werden. Unter anderem können dadurch Brüche einzelner Drähte oder inhomogene Bereiche im Schweißgut vermieden oder zumindest reduziert werden.

Analog zum weiter oben genannten Toleranzwert kann der zusätzliche Toleranzwert so gewählt sein, dass der zweite Knoten nach dem Einstellen der Breite des Verdichtungsraumes geringfügiges Spiel zwischen dem ersten Seitenelement und dem zweiten Seitenelement hat. Somit kann ein Verkanten oder Verklemmen des zweiten Knotens im Verdichtungsraum vermieden werden und es kann eine definierte Kräfteverteilung über den gesamten Querschnitt des zweiten Knotens gewährleistet werden.

Gemäß einer Ausführungsform ist jeder der elektrischen Leiter eine teilweise ummantelte Litze, etwa ein teilweise abisoliertes Kabel, und jeder der Leiterabschnitte ein nicht ummantelter Abschnitt der Litze. Somit können beispielsweise für Hochstromanwendungen geeignete Kabelverbünde oder -bäume mit langlebigen, sehr gut leitfähigen Verbindungsstellen sehr effizient hergestellt werden.

Ein in einem Verfahren gemäß einer Ausführungsform des ersten Aspekts der Erfindung hergestelltes Leiterbündel kann alternativ auch keine solche(n) Stufe(n) aufweisen.

Gemäß einer Ausführungsform ist der Knoten durch Ultraschallschweißen hergestellt. Dadurch kann das Leiterbündel ohne Aufschmelzen von Leitermaterial und damit - im Vergleich zu gängigen Schmelzschweißverfahren - mit verhältnismäßig geringem Fertigungsaufwand hergestellt werden.

Gemäß einer Ausführungsform ist jeder der elektrischen Leiter eine teilweise ummantelte Litze, wobei nicht ummantelte Abschnitte der Litzen zu dem Knoten verschweißt sind. Anders ausgedrückt kann jeder der elektrischen Leiter ein teilweise abisoliertes Kabel sein. Die Litzen können jeweils einen verhältnismäßig großen Leitungsquerschnitt von beispielsweise mindestens 10 mm² aufweisen. Dadurch kann das Leiterbündel zur geschützten Übertragung bzw. Verteilung von Strömen, insbesondere von verhältnismäßig hohen Strömen von beispielsweise mindestens 100 A, wie etwa in Elektro- oder Hybridfahrzeugen, verwendet werden.

### KURZE BESCHREIBUNG DER ZEICHNUNGEN

Nachfolgend werden vorteilhafte Ausführungsformen der Erfindung unter Bezugnahme auf die beigefügten Zeichnungen weiter erläutert, wobei weder die Zeichnungen noch die Erläuterungen als die Erfindung in irgendeiner Weise einschränkend auszulegen sind.
Figur 1 zeigt eine schematische Darstellung einer Ultraschallschweißeinrichtung mit geöffnetem Verdichtungsraum vor einem ersten Schweißvorgang.
Figur 2 zeigt die Ultraschallschweißeinrichtung aus Figur 1 mit ausgefahrenem erstem Seitenelement.
Figur 3 zeigt die Ultraschallschweißeinrichtung aus Figur 1 mit geschlossenem Verdichtungsraum beim ersten Schweißvorgang.
Figur 4 zeigt die Ultraschallschweißeinrichtung aus Figur 1 mit geöffnetem Verdichtungsraum nach dem ersten Schweißvorgang und vor einem zweiten Schweißvorgang.
Figur 5 zeigt die Ultraschallschweißeinrichtung aus Figur 1 mit geschlossenem Verdichtungsraum beim zweiten Schweißvorgang.
Figur 6 zeigt ein Ablaufdiagramm eines Verfahrens zum Schweißen eines Knotens mittels einer Ultraschallschweißeinrichtung gemäß einem Ausführungsbeispiel der Erfindung.
Figur 7 zeigt eine schematische Darstellung eines Leiterbündels im Querschnitt.
Figur 8 zeigt eine Seitenansicht des Leiterbündels aus Figur 7.

Die Figuren sind lediglich schematisch und nicht maßstabsgetreu. Gleiche Bezugszeichen bezeichnen in den verschiedenen Zeichnungen gleiche bzw. gleichwirkende Merkmale.

### BESCHREIBUNG VON VORTEILHAFTEN AUSFÜHRUNGSFORMEN

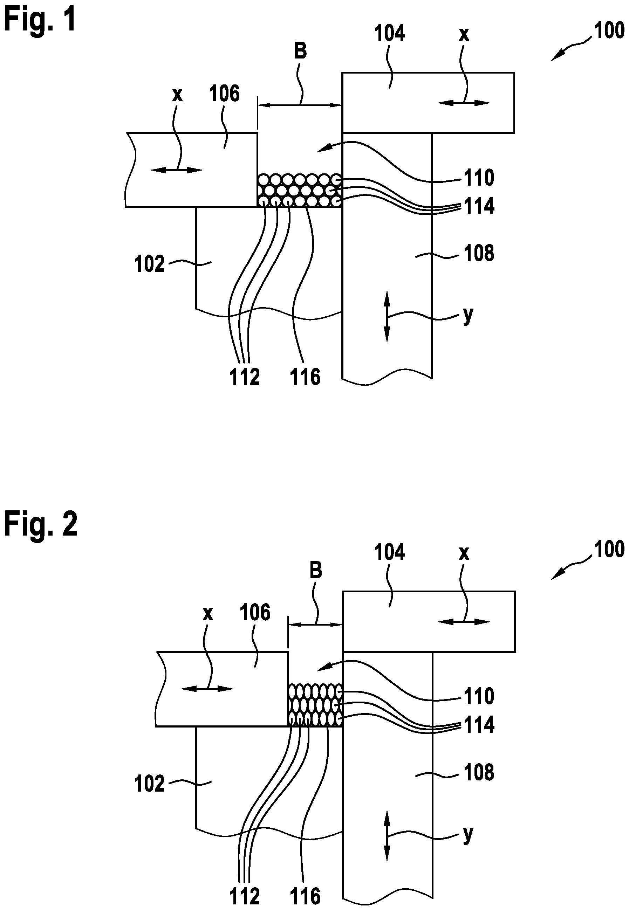

Figur 1 zeigt eine schematische Darstellung einer Ultraschallschweißeinrichtung 100 mit einer Sonotrode 102 zum Erzeugen von Ultraschallschwingungen, einem Amboss 104, einem ersten Seitenelement 106, etwa einem Seitenschieber, und einem zweiten Seitenelement 108, etwa einer Tuschierplatte. Die Sonotrode 102, der Amboss 104, das erste Seitenelement 106 und das zweite Seitenelement 108 begrenzen einen Verdichtungsraum 110, in den zu verschweißende erste Leiterabschnitte 112 mehrerer elektrischer Leiter 114 eingelegt sind. Alternativ können auch nur erste Leiterabschnitte 112 eines einzigen elektrischen Leiters 114 eingelegt werden, etwa zum Kompaktieren.

Figur 1 zeigt den Verdichtungsraum 110 beispielhaft in einem geöffneten Zustand, in dem der Verdichtungsraum 110 zu einer der Sonotrode 102 gegenüberliegenden Seite hin geöffnet ist und lediglich an drei Seiten durch die Sonotrode 102, das erste Seitenelement 106 und das zweite Seitenelement 108 begrenzt ist. Somit können die ersten Leiterabschnitte 112 von oben in den Verdichtungsraum 110 eingelegt werden, beispielsweise manuell von einem Bediener oder automatisiert durch einen Greifarm oder Ähnliches. Entgegen der in Figur 1 gezeigten schematischen Darstellung können die Seitenelemente 106, 108 auch so eingestellt sein, dass beim Einlegen zwischen den ersten Leiterabschnitten 112 und den jeweiligen Stirnseiten der beiden Seitenelemente 106, 108 etwas Luft ist. Alternativ kann der Seitenschieber 106 schon vor dem Einlegen der elektrischen Leiter 114 auf eine bestimmte Schweißbreite eingestellt werden. Dies erleichtert das Einlegen in manchen Fällen.

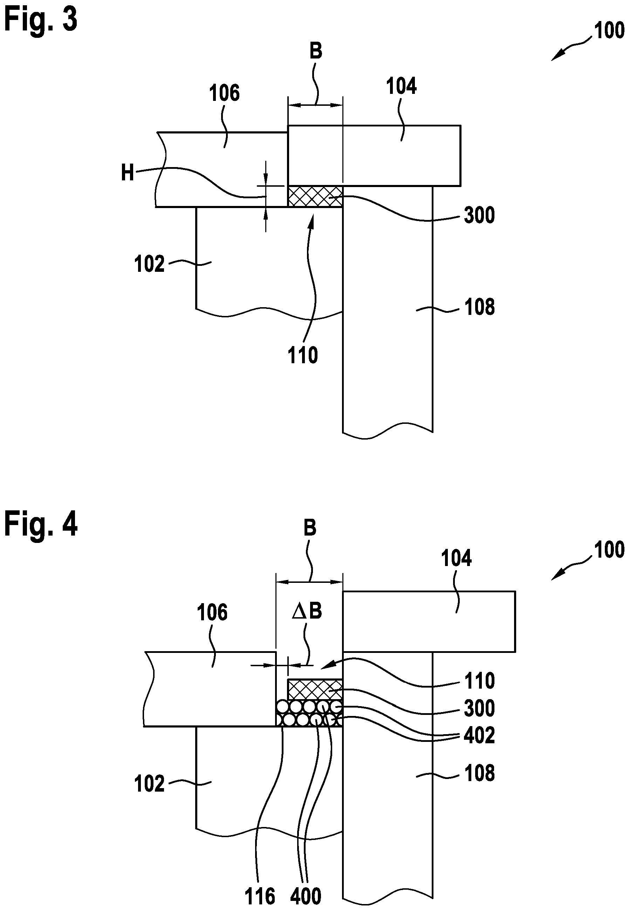

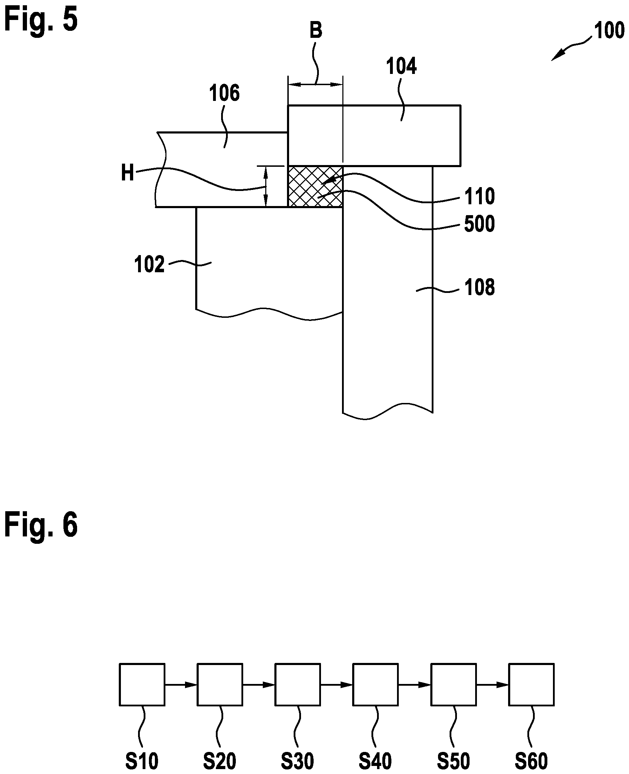

Der Verdichtungsraum 110 kann beispielsweise durch den Amboss 104 an der der Sonotrode 102 gegenüberliegenden Seite verschlossen werden, wie es in den Figuren 3 und 5 gezeigt ist.

Eine Breite B des Verdichtungsraumes 110 ist durch einen Abstand in x-Richtung zwischen dem ersten Seitenelement 106 und dem zweiten Seitenelement 108 vorgegeben und ist durch Bewegen des ersten Seitenelementes 106 und/oder des zweiten Seitenelementes 108 in x-Richtung variierbar. Beispielhaft ist in Figur 1 nur das erste Seitenelement 106 in x-Richtung beweglich, wobei das zweite Seitenelement 108 in x-Richtung feststehend ist.

Eine Höhe H des Verdichtungsraumes 110 ist durch einen Abstand in y-Richtung zwischen der Sonotrode 102 und dem Amboss 104 im geschlossenen Zustand des Verdichtungsraumes 110 vorgegeben und ist durch Bewegen der Sonotrode 102 und/oder des Ambosses 104 in y-Richtung variierbar. Die Höhe H ist in den Figuren 3 und 5 eingezeichnet. Beispielhaft ist in Figur 1 nur der Amboss 104 in y-Richtung beweglich, wobei die Sonotrode 102 in y-Richtung feststehend ist. Beispielsweise kann das zweite Seitenelement 108 in y-Richtung beweglich sein, wobei der Amboss 104 mit dem zweiten Seitenelement 108 mechanisch gekoppelt sein kann. Somit kann der Amboss 104 zusammen mit dem zweiten Seitenelement 108 in y-Richtung bewegt werden.

Bei den elektrischen Leitern 114 kann es sich jeweils um einzelne Drähte eines oder mehrerer Kabel handeln. Beispielsweise kann jeder der elektrischen Leiter 114 teilweise mit einem isolierenden Material ummantelt sein. Jeder der elektrischen Leiter 114 kann also ein einzelnes Kabel sein. Die ersten Leiterabschnitte 112 können nicht ummantelte Abschnitte eines solchen Kabels sein. Alternativ können mehrere der elektrischen Leiter 114 zu einer oder mehreren Litzen zusammengefasst sein. Beispielsweise können auch alle elektrischen Leiter 114 zu einer einzigen Litze zusammengefasst sein. Eine solche Litze kann wiederum teilweise von einem isolierenden Material ummantelt sein, also ein Kabel sein.

Die ersten Leiterabschnitte 112 können in mehreren Lagen auf einer Sonotrodenfläche 116 der Sonotrode 102 angeordnet sein. Über die Sonotrodenfläche 116 können die Ultraschallschwingungen in die ersten Leiterabschnitte 112 eingekoppelt werden, was bewirkt, dass die ersten Leiterabschnitte 112 stoffschlüssig miteinander verbunden werden, d. h. zu einem Knoten verschweißt werden.

Die Ultraschallschweißeinrichtung 100 ist ausgeführt, um die ersten Leiterabschnitte 112 in zwei aufeinanderfolgenden Schweißvorgängen zu verschweißen.

Hierzu kann das erste Seitenelement 106 nach dem Einlegen der ersten Leiterabschnitte 112 ein Stück weit ausgefahren werden, um die Breite B auf einen vorgegebenen Wert für einen ersten Schweißvorgang einzustellen (siehe Figur 2).

Zusätzlich kann beispielsweise der Amboss 104 durch Absenken des zweiten Seitenelementes 108 in y-Richtung abgesenkt werden und in x-Richtung auf das erste Seitenelement 106 zubewegt werden. Beispielsweise kann das erste Seitenelement 106 als Anschlag für den Amboss 104 in x-Richtung fungieren (siehe Figur 3).

Zum Schweißen wird die Sonotrode 102 aktiviert und es werden die ersten Leiterabschnitte 112 mittels der Sonotrode 102 und des Ambosses 104 zusammengedrückt. Dadurch werden die ersten Leiterabschnitte 112 zu einem ersten Knoten 300 verschweißt (siehe Figur 3). Dabei kann die Breite des ersten Knotens 300 der Breite B des Verdichtungsraumes 110 entsprechen. Das heißt, die Nennbreite des ersten Knotens 300 kann durch die Breite B des Verdichtungsraumes 110 vorgegeben sein.

Nach dem Schweißen des ersten Knotens 300 kann der Verdichtungsraum 110 beispielsweise durch Einfahren des ersten Seitenelementes 106 und/oder des Ambosses 104 wieder geöffnet werden. Der erste Knoten 300 kann nun aus dem Verdichtungsraum 110 entnommen werden und es können zweite Leiterabschnitte 400 mehrerer weiterer elektrischer Leiter 402 auf der Sonotrodenfläche 116 platziert werden (siehe Figur 4). Die zweiten Leiterabschnitte 400 können nicht ummantelte Abschnitte eines oder mehrerer weiterer Kabel sein. Auf die zweiten Leiterabschnitte 400 wird der erste Knoten 300 gelegt, sodass die Sonotrodenfläche 116 Kontakt mit den zweiten Leiterabschnitten 400, nicht aber mit dem ersten Knoten 300 hat.

Vor, bei oder nach dem Einlegen der zweiten Leiterabschnitte 400 und des ersten Knotens 300 wird die Breite B auf einen vorgegebenen Wert für einen zweiten Schweißvorgang eingestellt. Der vorgegebene Wert für den zweiten Schweißvorgang ist um einen vorgegebenen Toleranzwert ΔB größer als der vorgegebene Wert für den ersten Schweißvorgang. Der Toleranzwert ΔB ist so gewählt, dass der erste Knoten 300 etwas Spiel zwischen dem ersten Seitenelement 106 und dem zweiten Seitenelement 108 hat. Das Spiel verhindert, dass sich der erste Knoten 300 zwischen dem ersten Seitenelement 106 und dem zweiten Seitenelement 108 verklemmt oder verkantet (siehe Figur 4).

Anschließend werden die zweiten Leiterabschnitte 400 und der erste Knoten 300 im zweiten Schweißvorgang zu einem homogenen, zweiten Knoten 500 verschweißt, der deutlich größer als der erste Knoten 300 sein kann (siehe Figur 5). Dabei kann die Breite des zweiten Knotens 500 der Breite B des Verdichtungsraumes 110 entsprechen. Das heißt, die Nennbreite des zweiten Knotens 500 kann durch die Breite B des Verdichtungsraumes 110 vorgegeben sein.

Es ist möglich, dass der zweite Knoten 500 in einem dritten Schweißvorgang analog zum ersten und zweiten Schweißvorgang mit einem dritten Leiterabschnitt mindestens eines zusätzlichen elektrischen Leiters zu einem dritten Knoten verschweißt wird.

Figur 6 veranschaulicht den grundsätzlichen Ablauf des anhand der Figuren 1 bis 5 beschriebenen Ultraschall schweißverfahrens.

In Schritt S10 erfolgt das Anordnen zu verschweißender erster Leiterabschnitte 112 mindestens zweier elektrischer Leiter 114 in dem Verdichtungsraum 110.

In Schritt S20 erfolgt das Einstellen der Breite B des Verdichtungsraumes 110 auf den vorgegebenen Wert für den ersten Schweißvorgang.

In Schritt S30 erfolgt das Durchführen des ersten Schweißvorgangs durch Aktivieren der Sonotrode 102 und Zusammendrücken der ersten Leiterabschnitte 112 zwischen der der Sonotrode 102 und dem Amboss 104, wobei die ersten Leiterabschnitte 112 zu dem ersten Knoten 300 verschweißt werden.

In Schritt S40 erfolgt das Anordnen eines zu verschweißenden zweiten Leiterabschnitts 400 mindestens eines weiteren elektrischen Leiters 402 in dem Verdichtungsraum 110 zwischen dem ersten Knoten 300 und der Sonotrode 102.

In Schritt S50 erfolgt das Einstellen der Breite B des Verdichtungsraumes 110 auf den vorgegebenen Wert für den zweiten Schweißvorgang, wobei die Breite B des Verdichtungsraumes 110 für den zweiten Schweißvorgang um einen vorgegebenen Toleranzwert ΔB größer als die Breite B des Verdichtungsraumes 110 für den ersten Schweißvorgang ist.

In Schritt S60 erfolgt das Durchführen des zweiten Schweißvorgangs durch erneutes Aktivieren der Sonotrode 102 und Zusammendrücken des ersten Knotens 300 und des zweiten Leiterabschnitts 400 zwischen der Sonotrode 102 und dem Amboss 104, wobei der erste Knoten 300 und der zweite Leiterabschnitt 400 zu dem zweiten Knoten 500 verschweißt werden.

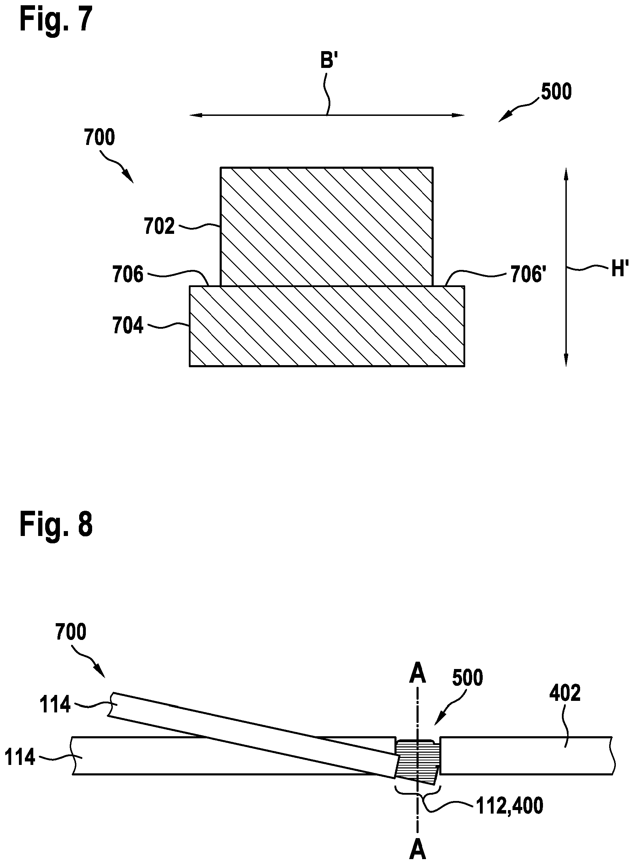

Der zweite Knoten 500 kann aufgrund der unterschiedlichen Schweißbreiten eine oder zwei Stufen an seinen Seitenflächen aufweisen (siehe auch Figur 7).

Figur 7 zeigt einen Querschnitt durch ein Leiterbündel 700 entlang einer in Figur 8 gezeigten Schnittlinie A-A. Das Leiterbündel 700 kann beispielsweise in dem vorangehend anhand der Figuren 1 bis 6 beschriebenen Verfahren hergestellt worden sein und die Leiter 114, 402 umfassen, die in dem zweiten Knoten 500 miteinander verschweißt sind (siehe auch Figur 8).

Der zweite Knoten 500 ist in Richtung seiner Höhe H' in einen ersten Knotenabschnitt 702 und einen zweiten Knotenabschnitt 704 unterteilt, die jeweils einen annähernd rechteckigen Querschnitt aufweisen. Die Knotenabschnitte 702, 704 weichen in Richtung ihrer Breite B' durchschnittlich um mindestens 0,01 mm, vorzugsweise um mindestens 0,1 mm, voneinander ab.

Die Knotenabschnitte 702, 704 können in Richtung ihrer Breite B' zueinander versetzt sein, sodass sich auf einer oder beiden Seiten des zweiten Knotens 500 eine Stufe bildet. In Figur 7 weist der zweite Knoten 500 beispielhaft eine linke Stufe 706 und eine rechte Stufe 706' auf, die je nach Versatz der Knotenabschnitte 702, 704 unterschiedlich breit sein können. Die Summe der jeweiligen Breiten der Stufen 706, 706' kann beispielsweise mindestens 0,2 mm betragen. Die Stufen 706, 706' können also mit bloßem Auge erkennbar sein.

Ferner ist aus Figur 8 ersichtlich, dass jeder der elektrischen Leiter 114, 402 eine teilweise ummantelte Litze ist und die Litzen in einem nicht ummantelten Bereich, der die Leiterabschnitte 112, 400 umfasst, zu dem zweiten Knoten 500 verschweißt sind. Die Breite B' des breitesten Knotenabschnitts 702, 704 kann gleich der Nennbreite des zweiten Knotens 500 sein.

Die Höhe H' kann gleich der Nennhöhe des zweiten Knotens 500 sein.

### Bezugszeichenliste

- 100: Ultraschweißeinrichtung
- 102: Sonotrode
- 104: Amboss
- 106: erstes Seitenelement
- 108: zweites Seitenelement
- 110: Verdichtungsraum
- 112: erster Leiterabschnitt
- 114: elektrischer Leiter
- 116: Sonotrodenfläche
- 300: erster Knoten
- 400: zweiter Leiterabschnitt
- 402: weiterer elektrischer Leiter
- 500: zweiter Knoten
- 700: Leiterbündel
- 702: erster Knotenabschnitt
- 704: zweiter Knotenabschnitt
- 706: linke Stufe
- 706': rechte Stufe
- B: Breite des Verdichtungsraumes
- B': Breite des zweiten Knotens
- ΔB: Toleranzwert
- H: Höhe des Verdichtungsraumes
- H': Höhe des zweiten Knotens
- x: x-Richtung
- y: y-Richtung

## Patentansprüche

1. Verfahren zum Schweißen eines Knotens (500) mittels einer Ultraschallschweißeinrichtung (100), wobei die Ultraschallschweißeinrichtung (100) eine Sonotrode (102) zum Erzeugen von Ultraschallschwingungen, einen Amboss (104), ein erstes Seitenelement (106), ein zweites Seitenelement (108) und einen Verdichtungsraum (110) aufweist, dessen Höhe (H) durch Variieren eines Abstands zwischen der Sonotrode (102) und dem Amboss (104) einstellbar ist und dessen Breite (B) durch Variieren eines Abstands zwischen dem ersten Seitenelement (106) und dem zweiten Seitenelement (108) einstellbar ist, wobei das Verfahren umfasst:
Anordnen zu verschweißender erster Leiterabschnitte (112) mindestens zweier elektrischer Leiter (114) in dem Verdichtungsraum (110);
Einstellen der Breite (B) des Verdichtungsraumes (110) auf einen vorgegebenen Wert für einen ersten Schweißvorgang;
Durchführen des ersten Schweißvorgangs durch Aktivieren der Sonotrode (102) und Zusammendrücken der ersten Leiterabschnitte (112) zwischen der Sonotrode (102) und dem Amboss (104), wobei die ersten Leiterabschnitte (112) zu einem ersten Knoten (300) verschweißt werden;
Anordnen eines zu verschweißenden zweiten Leiterabschnitts (400) mindestens eines weiteren elektrischen Leiters (402) und des ersten Knotens (300) in dem Verdichtungsraum (110);
**gekennzeichnet durch** das Folgende:
Einstellen der Breite (B) des Verdichtungsraumes (110) auf einen vorgegebenen Wert für einen zweiten Schweißvorgang, wobei die Breite (B) des Verdichtungsraumes (110) für den zweiten Schweißvorgang um einen vorgegebenen Toleranzwert (ΔB) größer als die Breite (B) des Verdichtungsraumes (110) für den ersten Schweißvorgang ist; und
Durchführen des zweiten Schweißvorgangs durch erneutes Aktivieren der Sonotrode (102) und Zusammendrücken des ersten Knotens (300) und des zweiten Leiterabschnitts (400) zwischen der Sonotrode (102) und dem Amboss (104), wobei der erste Knoten (300) und der zweite Leiterabschnitt (400) zu einem zweiten Knoten (500) verschweißt werden,
wobei der vorgegebene Toleranzwert (ΔB) mindestens 0,01 mm beträgt, und
wobei der vorgegebene Toleranzwert (ΔB) höchstens 5 mm beträgt.

2. Verfahren nach Anspruch 1,
wobei der zweite Leiterabschnitt (400) zwischen dem ersten Knoten (300) und der Sonotrode (102) angeordnet wird.

3. Verfahren nach Anspruch 1 oder 2,
wobei der vorgegebene Toleranzwert (ΔB) mindestens 0,1 mm beträgt.

4. Verfahren nach einem der vorhergehenden Ansprüche ,
wobei der vorgegebene Toleranzwert (ΔB) höchstens 2 mm beträgt..

5. Verfahren nach einem der vorhergehenden Ansprüche,
wobei der zweite Knoten (500) eine Querschnittsfläche von mindestens 3 mm² aufweist; oder
wobei der zweite Knoten (500) eine Querschnittsfläche von mindestens 50 mm² aufweist

6. Verfahren nach einem der vorhergehenden Ansprüche,
wobei der zweite Knoten (500) eine Nennbreite von mindestens 2 mm aufweist; oder
wobei der zweite Knoten (500) eine Nennbreite von mindestens 10 mm aufweist.

7. Verfahren nach einem der vorhergehenden Ansprüche,
wobei die Breite (B) des Verdichtungsraumes (110) für den ersten Schweißvorgang gleich einer Nennbreite des ersten Knotens (300) ist; und/oder
wobei die Breite (B) des Verdichtungsraumes (110) für den zweiten Schweißvorgang gleich einer Nennbreite des zweiten Knotens (500) ist.

8. Verfahren nach Anspruch 7,
wobei die Breite (B) des Verdichtungsraumes (110) für den ersten Schweißvorgang gleich einer Differenz zwischen der Nennbreite des zweiten Knotens (500) und dem vorgegebenen Toleranzwert (ΔB) ist.

9. Verfahren nach einem der vorhergehenden Ansprüche,
wobei eine Querschnittsfläche des zweiten Leiterabschnitts (400) mindestens so groß wie eine jeweilige kleinste Querschnittsfläche der ersten Leiterabschnitte (112) ist.

10. Verfahren nach einem der vorhergehenden Ansprüche, ferner umfassend:
Anordnen eines zu verschweißenden dritten Leiterabschnitts mindestens eines zusätzlichen elektrischen Leiters und des zweiten Knotens (500) in dem Verdichtungsraum (110);
Einstellen der Breite (B) des Verdichtungsraumes (110) auf einen vorgegebenen Wert für einen dritten Schweißvorgang, wobei die Breite (B) des Verdichtungsraumes (110) für den dritten Schweißvorgang um einen vorgegebenen zusätzlichen Toleranzwert größer als die Breite (B) des Verdichtungsraumes (110) für den zweiten Schweißvorgang ist; und
Durchführen des dritten Schweißvorgangs durch erneutes Aktivieren der Sonotrode (102) und Zusammendrücken des zweiten Knotens (500) und des dritten Leiterabschnitts zwischen der Sonotrode (102) und dem Amboss (104), wobei der zweite Knoten (500) und der dritte Leiterabschnitt zu einem dritten Knoten verschweißt werden.

11. Verfahren nach einem der vorhergehenden Ansprüche,
wobei jeder der elektrischen Leiter (114, 402) eine teilweise ummantelte Litze ist und jeder der Leiterabschnitte (112, 400) ein nicht ummantelter Abschnitt der Litze ist.

## Claims

1. Method for welding a splice (500) by means of an ultrasonic welding device (100), wherein the ultrasonic welding device (100) has a sonotrode (102) for generating ultrasonic vibrations, an anvil (104), a first lateral element (106), a second lateral element (108) and a compaction chamber (110), the height (H) of which is adjustable by varying a distance between the sonotrode (102) and the anvil (104) and the width (B) of which is adjustable by varying a distance between the first lateral element (106) and the second lateral element (108), wherein the method comprises:
arranging first conductor portions (112) of at least two electrical conductors (114) to be welded in the compaction chamber (110);
adjusting the width (B) of the compaction chamber (110) to a predetermined value for a first welding operation;
performing the first welding operation by activating the sonotrode (102) and compressing the first conductor portions (112) between the sonotrode (102) and the anvil (104), wherein the first conductor portions (112) are welded together to form a first splice (300);
arranging a second conductor portion (400) of at least one further electrical conductor (402) to be welded and the first splice (300) in the compaction chamber (110);
**characterised by** the following:
adjusting the width (B) of the compaction chamber (110) to a predetermined value for a second welding operation, wherein the width (B) of the compaction chamber (110) for the second welding operation is greater by a predetermined tolerance value (ΔB) than the width (B) of the compaction chamber (110) for the first welding operation; and
performing the second welding operation by reactivating the sonotrode (102) and compressing the first splice (300) and the second conductor portion (400) between the sonotrode (102) and the anvil (104), wherein the first splice (300) and the second conductor portion (400) are welded together to form a second splice (500),
wherein the predetermined tolerance value (ΔB) is at least 0.01 mm, and
wherein the predetermined tolerance value (ΔB) is at most 5 mm.

2. Method according to claim 1,
wherein the second conductor portion (400) is arranged between the first splice (300) and the sonotrode (102).

3. Method according to claim 1 or 2,
wherein the predetermined tolerance value (ΔB) is at least 0.1 mm.

4. Method according to one of the preceding claims,
wherein the predetermined tolerance value (ΔB) is at most 2 mm.

5. Method according to one of the preceding claims,
wherein the second splice (500) has a cross-sectional area of at least 3 mm²; or
wherein the second splice (500) has a cross-sectional area of at least 50 mm².

6. Method according to one of the preceding claims,
wherein the second splice (500) has a nominal width of at least 2 mm; or
wherein the second splice (500) has a nominal width of at least 10 mm.

7. Method according to one of the preceding claims,
wherein the width (B) of the compaction chamber (110) for the first welding operation is equal to a nominal width of the first splice (300); and/or
wherein the width (B) of the compaction chamber (110) for the second welding operation is equal to a nominal width of the second splice (500).

8. Method according to claim 7,
wherein the width (B) of the compaction chamber (110) for the first welding operation is equal to a difference between the nominal width of the second splice (500) and the predetermined tolerance value (ΔB).

9. Method according to one of the preceding claims,
wherein a cross-sectional area of the second conductor portion (400) is at least as large as a respective smallest cross-sectional area of the first conductor portions (112).

10. Method according to one of the preceding claims, further comprising:
arranging a third conductor portion of at least one additional electrical conductor to be welded and the second splice (500) in the compaction chamber (110);
adjusting the width (B) of the compaction chamber (110) to a predetermined value for a third welding operation, wherein the width (B) of the compaction chamber (110) for the third welding operation is greater by a predetermined additional tolerance value than the width (B) of the compaction chamber (110) for the second welding operation; and
performing the third welding operation by reactivating the sonotrode (102) and compressing the second splice (500) and the third conductor portion between the sonotrode (102) and the anvil (104), wherein the second splice (500) and the third conductor portion are welded together to form a third splice.

11. Method according to one of the preceding claims,
wherein each of the electrical conductors (114, 402) is a partially sheathed strand and each of the conductor portions (112, 400) is an unsheathed portion of the strand.

## Revendications

1. Procédé de soudage d'un noeud (500) au moyen d'un dispositif de soudage par ultrasons (100), le dispositif de soudage par ultrasons (100) présentant une sonotrode (102) pour générer des vibrations ultrasonores, une enclume (104), un premier élément latéral (106), un deuxième élément latéral (108) et une chambre de compression (110), dont la hauteur (H) est réglable en faisant varier une distance entre la sonotrode (102) et l'enclume (104) et dont la largeur (B) est réglable en faisant varier une distance entre le premier élément latéral (106) et le deuxième élément latéral (108), le procédé comprenant de :
disposer des premières parties de conducteur (112) à souder d'au moins deux conducteurs électriques (114) dans la chambre de compression (110) ;
régler la largeur (B) de la chambre de compression (110) à une valeur prédéfinie pour une première opération de soudage ;
effectuer la première opération de soudage en activant la sonotrode (102) et en comprimant les premières parties de conducteur (112) entre la sonotrode (102) et l'enclume (104), les premières parties de conducteur (112) étant soudées en un premier noeud (300) ;
disposer une deuxième partie de conducteur (400) à souder d'au moins un autre conducteur électrique (402) et du premier noeud (300) dans la chambre de compression (110) ;
**caractérisé par** :
régler la largeur (B) de la chambre de compression (110) à une valeur prédéfinie pour une deuxième opération de soudage, la largeur (B) de la chambre de compression (110) pour la deuxième opération de soudage étant supérieure d'une valeur de tolérance prédéfinie (ΔB) à la largeur (B) de la chambre de compression (110) pour la première opération de soudage ; et
effectuer la deuxième opération de soudage en activant à nouveau la sonotrode (102) et en comprimant le premier noeud (300) et la deuxième partie de conducteur (400) entre la sonotrode (102) et l'enclume (104), le premier noeud (300) et la deuxième partie de conducteur (400) étant soudés en un deuxième noeud (500),
dans lequel la valeur de tolérance prédéfinie (ΔB) est d'au moins 0,01 mm, et
dans lequel la valeur de tolérance prédéfinie (ΔB) est d'au plus 5 mm.

2. Procédé selon la revendication 1,
dans lequel la deuxième partie de conducteur (400) est disposée entre le premier noeud (300) et la sonotrode (102).

3. Procédé selon la revendication 1 ou 2,
dans lequel la valeur de tolérance prédéfinie (ΔB) est d'au moins 0,1 mm.

4. Procédé selon l'une des revendications précédentes,
dans lequel la valeur de tolérance prédéfinie (ΔB) est d'au plus 2 mm.

5. Procédé selon l'une des revendications précédentes,
dans lequel le deuxième noeud (500) présente une surface de section transversale d'au moins 3 mm² ; ou
dans lequel le deuxième noeud (500) présente une surface de section transversale d'au moins 50 mm².

6. Procédé selon l'une des revendications précédentes,
dans lequel le deuxième noeud (500) présente une largeur nominale d'au moins 2 mm ; ou
dans lequel le deuxième noeud (500) présente une largeur nominale d'au moins 10 mm.

7. Procédé selon l'une des revendications précédentes,
dans lequel la largeur (B) de la chambre de compression (110) pour la première opération de soudage est égale à une largeur nominale du premier noeud (300) ; et/ou
dans lequel la largeur (B) de la chambre de compression (110) pour la deuxième opération de soudage est égale à une largeur nominale du deuxième noeud (500).

8. Procédé selon la revendication 7,
dans lequel la largeur (B) de la chambre de compression (110) pour la première opération de soudage est égale à une différence entre la largeur nominale du deuxième noeud (500) et la valeur de tolérance prédéfinie (ΔB).

9. Procédé selon l'une des revendications précédentes,
dans lequel une surface de section transversale de la deuxième partie de conducteur (400) est au moins aussi grande qu'une surface de section transversale la plus petite de chacune des premières parties de conducteur (112) .

10. Procédé selon l'une des revendications précédentes, comprenant en outre de :
disposer une troisième partie de conducteur à souder d'au moins un conducteur électrique supplémentaire et du deuxième noeud (500) dans la chambre de compression (110) ;
régler la largeur (B) de la chambre de compression (110) à une valeur prédéfinie pour une troisième opération de soudage, la largeur (B) de la chambre de compression (110) pour la troisième opération de soudage étant supérieure à la largeur (B) de la chambre de compression (110) pour la deuxième opération de soudage d'une valeur de tolérance supplémentaire prédéfinie ; et
effectuer la troisième opération de soudage en activant à nouveau la sonotrode (102) et en comprimant le deuxième noeud (500) et la troisième partie de conducteur entre la sonotrode (102) et l'enclume (104), le deuxième noeud (500) et la troisième partie de conducteur étant soudés en un troisième noeud.

11. Procédé selon l'une des revendications précédentes,
dans lequel chacun des conducteurs électriques (114, 402) est un câble toronné partiellement gainé et chacune des parties de conducteur (112, 400) est une partie non gainée du câble toronné.
